# EUROPEAN PATENT APPLICATION

(11) **EP 3 116 047 A1**
(43) Date of publication of application: **11.01.2017**
(21) Application number: 15758779.1
(22) Date of filing: 23.02.2015
(51) Int. Cl.: H01M 2/10, H01G 2/04, H01G 11/10, H01G 11/76, H01M 2/20, H01M 2/30, H01G 4/228

(54) **ELECTRICITY STORAGE MODULE**

(30) Priority: 04.03.2014 JP 2014041429
(71) Applicant: AutoNetworks Technologies, Ltd., Yokkaichi-shi, Mie 510-8503 (JP); Sumitomo Wiring Systems, Ltd., Yokkaichi-shi, Mie 510-8503 (JP); Sumitomo Electric Industries, Ltd., Osaka-shi, Osaka 541-0041 (JP)
(72) Inventor: SHIMIZU Hiroshi, Yokkaichi-shi Mie 510-8503 (JP); HIRAMITSU Hiroomi, Yokkaichi-shi Mie 510-8503 (JP)
(74) Representative: Müller-Boré & Partner Patentanwälte PartG mbB
(86) International application number: PCT/JP2015/054973
(87) International publication number: WO 2015/133307

(57) **Abstract**

An electricity storage module (10A, 10B) includes an electricity storage element group (12) in which a plurality of electricity storage elements (11) are electrically connected, and a positive-electrode and a negative-electrode power terminals (22P, 22N, 66P, 66N) to be electrically connected to the electricity storage element group (12) and electrically connected to mating terminals (14). The power terminals (22P, 22N, 66P, 66N) are selected from a positive-electrode and a negative-electrode vertical power terminals (66P, 66N) to which the mating terminals (14) are connected in a vertical downward direction or a positive-electrode and a negative-electrode non-vertical power terminals (22P, 22N) to which the mating terminals (14) are connected in a direction different from the vertical downward direction.

## Description

### Technical Field

The present invention relates to an electricity storage module.

### Background Art

A battery module described in Japanese Unexamined Patent Publication No. 2001-11039 is conventionally known. This battery module is formed by laminating a plurality of batteries and sandwiching them by a pair of plate-like supporting bodies.

A battery module includes a positive-electrode and a negative-electrode external connection terminals for connection to an external device. The external connection terminals are provided on a side wall of the battery module. The external connection terminals are connected to terminals connected to the external device in a horizontal direction.

### Citation List

### Patent Literature

Patent Literature 1:
Japanese Unexamined Patent Publication No. 2001-110379

### Summary of the Invention

### Technical Problem

However, according to the above configuration, it is difficult to ensure a work space for connecting the terminals connected to the external device to the external connection terminals in the horizontal direction depending on an installation place of the battery module. In such a case, it is desirable to enable the terminals connected to the external device to be connected to the external connection terminals vertically from above.

The present invention was completed based on the above situation.

### Solution to Problem

The present invention is directed to an electricity storage module with an electricity storage element group in which a plurality of electricity storage elements are electrically connected, and a positive-electrode and a negative-electrode power terminals to be electrically connected to the electricity storage element group and electrically connected to mating terminals, wherein the power terminals are selected from a positive-electrode and a negative-electrode vertical power terminals to which the mating terminals are connected in a vertical downward direction or a positive-electrode and a negative-electrode non-vertical power terminals to which the mating terminals are connected in a direction different from the vertical downward direction.

According to the present invention, a direction of connecting the mating terminals to the power terminals of the electricity storage module can be selected from either the vertical downward direction or the direction different from the vertical downward direction by selectively mounting either the vertical power terminals or the non-vertical power terminals on the electricity storage element group.

The following modes are preferable as embodiments of the present invention.

The non-vertical power terminals are preferably connected to the mating terminals in a horizontal direction.

According to the above mode, the mating terminals can be connected to the non-vertical power terminals in the horizontal direction.

The positive-electrode and negative-electrode vertical power terminals are preferably arranged at positions offset when viewed vertically from above.

According to the above mode, the mating terminals can be easily connected to the vertical power terminals vertically from above.

Each of the positive-electrode and negative-electrode power terminals is preferably arranged on a spacer made of insulating synthetic resin.

According to the above mode, the power terminals are electrically insulated from other components by the spacer.

### Effects of the Invention

According to the present invention, it is possible to make a direction of connecting mating terminals to power terminals of an electricity storage module selectable from a vertically upward direction and a direction different from the vertically upward direction.

### Brief Description of the Drawings

FIG. 1 is a perspective view of an electricity storage module of a horizontal connection type according to one embodiment of the present invention,
FIG. 2 is a perspective view of the electricity storage module showing a state before a connector cover is mounted,
FIG. 3 is a perspective view of the electricity storage module showing a state before a cover is mounted,
FIG. 4 is a partial enlarged perspective view showing a positive-electrode and a negative-electrode leads of an electricity storage element,
FIG. 5 is a partial enlarged section showing a connecting structure of the positive-electrode and negative-electrode leads of the electricity storage elements,
FIG. 6 is a partial enlarged perspective view showing the connecting structure of the positive-electrode and negative-electrode leads of the electricity storage elements,
FIG. 7 is a perspective view showing an upper busbar,
FIG. 8 is a plan view showing the upper busbar,
FIG. 9 is a perspective view showing a first right-middle busbar,
FIG. 10 is a plan view showing the first right-middle busbar,
FIG. 11 is a bottom view showing the first right-middle busbar,
FIG. 12 is a perspective view showing a left-middle busbar,
FIG. 13 is a plan view showing the left-middle busbar,
FIG. 14 is a perspective view showing a lower busbar,
FIG. 15 is a plan view showing the lower busbar,
FIG. 16 is a perspective view showing a state where the upper busbar and the first right-middle busbar are mounted on an upper spacer,
FIG. 17 is a plan view showing the state where the upper busbar and the first right-middle busbar are mounted on the upper spacer,
FIG. 18 is a perspective view showing the upper spacer,
FIG. 19 is a plan view showing the upper spacer,
FIG. 20 is a perspective view showing a state where the left-middle busbar is mounted on a middle busbar,
FIG. 21 is a plan view showing the state where the left-middle busbar is mounted on the middle busbar,
FIG. 22 is a perspective view showing a state where a second right-middle busbar is mounted on the middle busbar,
FIG. 23 is a plan view showing the state where the second right-middle busbar is mounted on the middle busbar,
FIG. 24 is a perspective view showing the middle spacer,
FIG. 25 is a plan view showing the middle spacer,
FIG. 26 is a perspective view showing a state where the lower busbar is mounted on a lower spacer,
FIG. 27 is a plan view showing the state where the lower busbar is mounted on the lower spacer,
FIG. 28 is a perspective view showing the lower spacer
FIG. 29 is a plan view showing the lower spacer,
FIG. 30 is a partial enlarged perspective view showing a state where the electricity storage element of a lowermost layer is laid on the lower spacer mounted with the lower busbar,
FIG. 31 is a partial enlarged perspective view showing a state where the middle spacer mounted with the second right-middle busbar is further laid in the state shown in FIG. 30,
FIG. 32 is a partial enlarged perspective view showing a state where the electricity storage element of a third layer from top is further laid in the state shown in FIG. 31,
FIG. 33 is a partial enlarged perspective view showing a state where the middle spacer mounted with the left-middle busbar is further laid in the state shown in FIG. 32,
FIG. 34 is a partial enlarged perspective view showing a state where the electricity storage element of a second layer from top is further laid in the state shown in FIG. 33,
FIG. 35 is a partial enlarged perspective view showing a state where the upper spacer mounted with the upper busbar and the first right-middle busbar is further laid in the state shown in FIG. 34,
FIG. 36 is a partial enlarged perspective view showing a state where the electricity storage element of an uppermost layer is further laid in the state shown in FIG. 35,
FIG. 37 is a perspective view showing an electricity storage module of a vertical connection type,
FIG. 38 is a perspective view showing an upper busbar,
FIG. 39 is a plan view showing the upper busbar,
FIG. 40 is a perspective view showing an upper spacer,
FIG. 41 is a plan view showing the upper spacer,
FIG. 42 is a perspective view showing a state where the upper busbar and a first right-middle busbar are mounted on the upper spacer,
FIG. 43 is a plan view showing the state where the upper busbar and the first right-middle busbar are mounted on the upper spacer,
FIG. 44 is a perspective view showing a lower busbar,
FIG. 45 is a plan view showing the lower busbar,
FIG. 46 is a perspective view showing a lower spacer,
FIG. 47 is a plan view showing the lower spacer,
FIG. 48 is a perspective view showing a state where the lower busbar is mounted on the lower spacer,
FIG. 49 is a plan view showing the state where the lower busbar is mounted on the lower spacer,
FIG. 50 is a partial enlarged plan view showing a state where a positive-electrode and a negative-electrode vertical power terminals are arranged at positions offset when viewed from above, and
FIG. 51 is a partial enlarged perspective view showing the state where the positive-electrode and the negative-electrode vertical power terminals are arranged at the positions offset when viewed from above.

### Embodiment of the Invention

### <Embodiment>

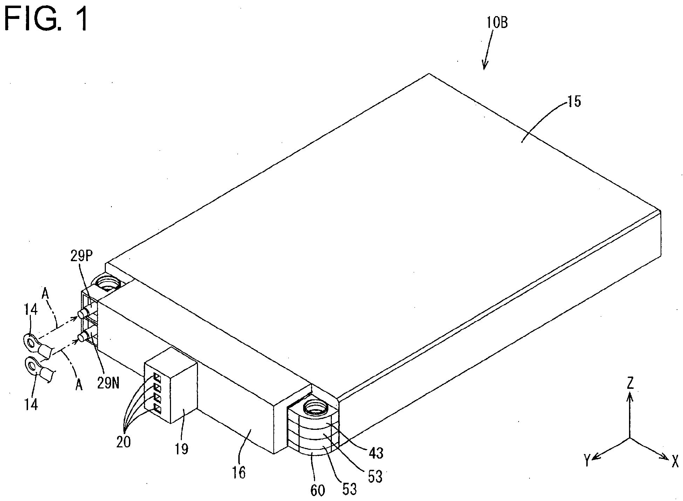

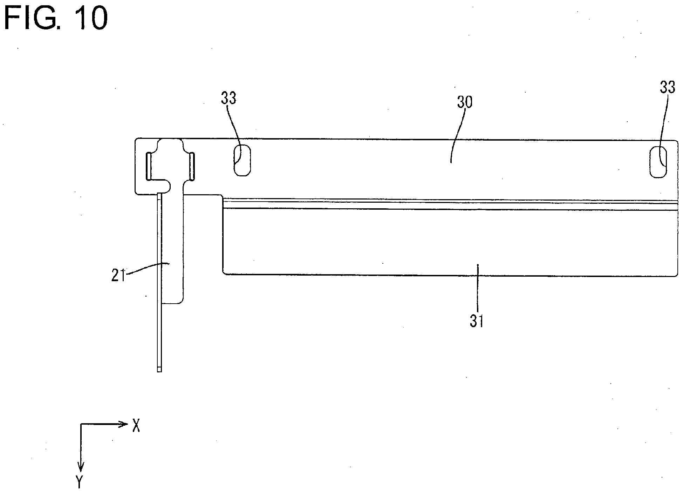

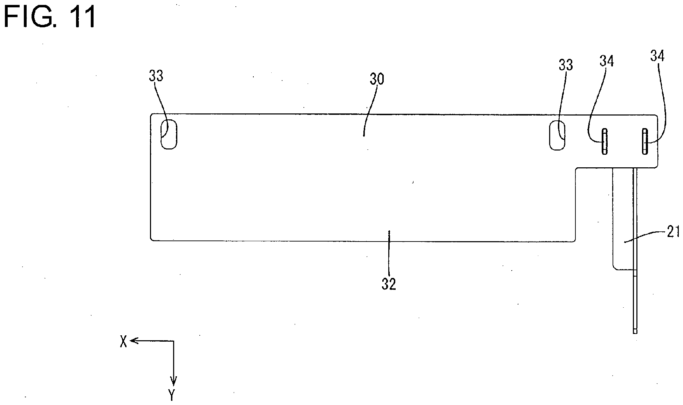

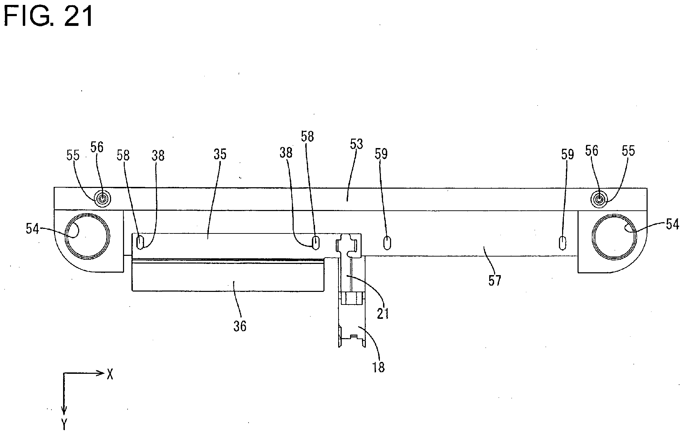

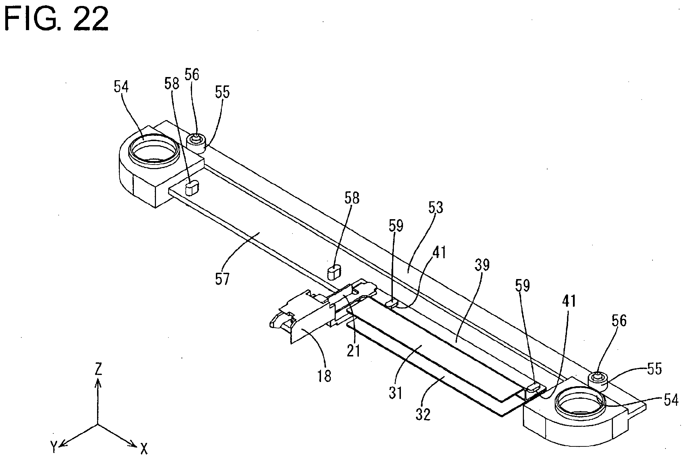

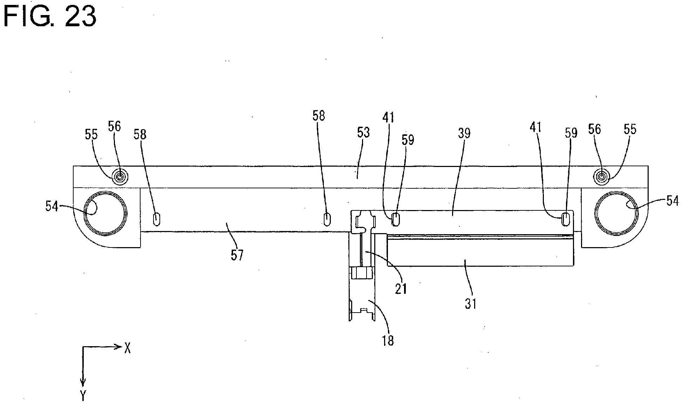

One embodiment of the present invention is described with reference to FIGS. 1 to 51. In the following description, a Z direction is a vertical direction, an X direction is a lateral direction and a Y direction is a front-back direction. Note that, for a plurality of same members, one member is denoted by a reference sign and the other members are not denoted by the reference sign in some cases.

A gravitational direction and directions which are different from the gravitational direction, but substantially the same as the gravitational direction are regarded as the vertical direction. For example, directions at angles of within 5° to the gravitational direction are substantially regarded as the vertical direction.

A horizontal direction is a direction along a plane perpendicular to the vertical direction. The X and Y directions according to this embodiment are both horizontal directions. The horizontal direction and directions which are different from the horizontal direction, but substantially the same as the horizontal direction are regarded as the horizontal direction. For example, directions at angles of within 5° to the horizontal direction are substantially regarded as the horizontal direction.

### (Electricity Storage Module 10A, 10B)

An electricity storage module 10A, 10B according to this embodiment is mounted in a vehicle such as an electric vehicle or a hybrid vehicle. The electricity storage module 10A, 10B is used, for example, for a vehicle drive source or an integrated starter generator (ISG).

The electricity storage module 10A, 10B includes an electricity storage element group 12 in which a plurality of electricity storage elements 11 are electrically connected, and a positive-electrode power terminal 22P, 66P and a negative-electrode power terminal 22N, 66N electrically connected to the electricity storage element group 12. The positive-electrode and negative-electrode power terminals 22P, 66P, 22N and 66N are electrically connected to mating terminals 14 electrically connected to an external device (not shown) arranged outside the electricity storage module 10A, 10B.

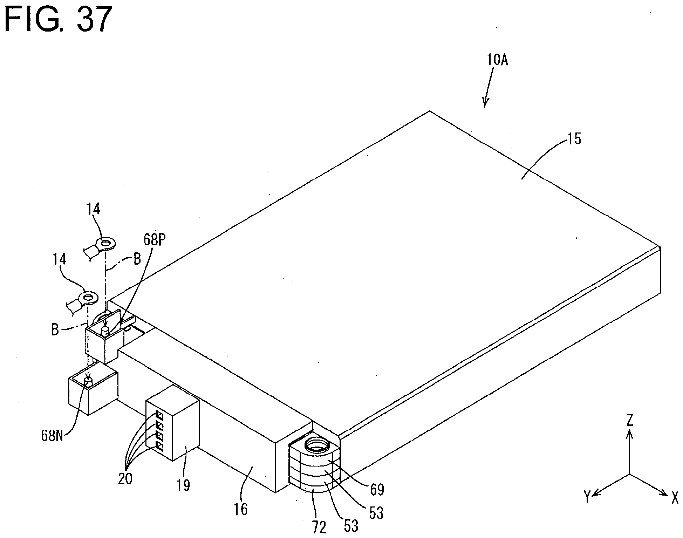

As shown in FIGS. 1 and 37, the electricity storage modules 10A, 10B according to this embodiment include the electricity storage module 10A of a vertical connection type in which the mating terminals 14 are connected to the positive-electrode and negative-electrode power terminals 22P, 22N vertically from above and the electricity storage module 10B of a horizontal connection type in which the mating terminals 14 are connected to the positive-electrode and negative-electrode power terminals 66P, 66N in the horizontal direction and either type can be selected.

### (Electricity Storage Module 10B of Horizontal Connection Type)

As shown in FIG. 1, the electricity storage element group 12 is accommodated in a case 15 having a rectangular parallelepiped shape and having an open front side. The case 15 may be made of metal or synthetic resin and an arbitrary material can be selected according to need.

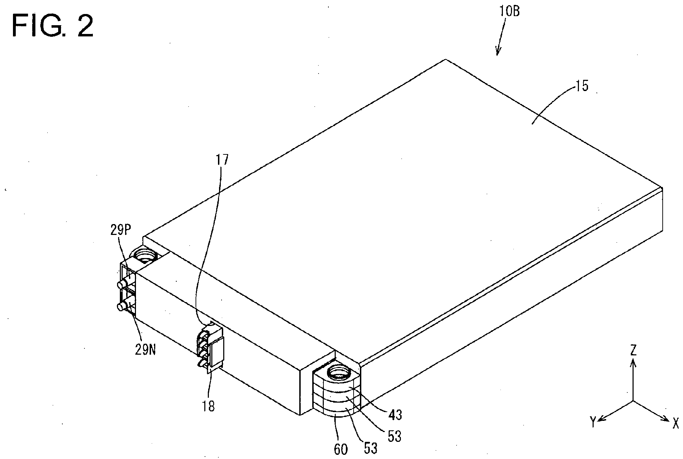

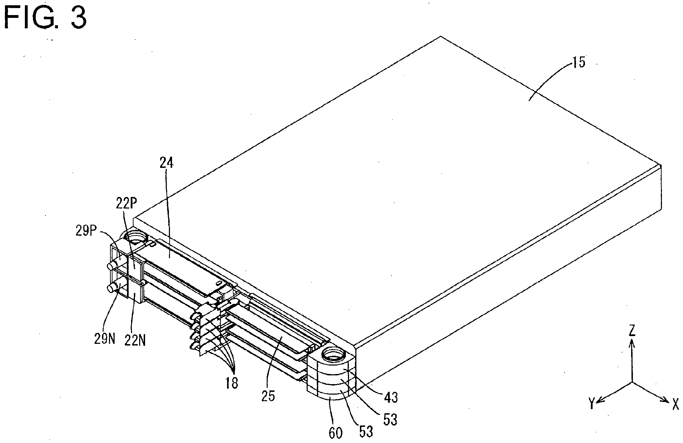

As shown in FIGS. 2 and 3, an opening of the case 15 is closed with a cover 16 mounted on the case 15. The cover 16 has a rectangular shape when viewed from front and is shaped to be slightly larger than the opening 15 of the case 15.

The cover 16 is formed with a through hole 17 near a center in the lateral direction. Connector housings 18 extending in the front-back direction are passed through this through hole 17 to extend outward from the case 15.

A connector cover 19 for covering the connector housings 18 is mounted on the cover 16. The connector cover 19 is shaped to be slightly larger than the connector housings 18. A plurality of (four in this embodiment) openings 20 are formed side by side at intervals in the vertical direction on a front wall of the connector cover 19. Unillustrated terminals are inserted through these openings 20 and electrically connected to voltage detection terminals 21 arranged in the connector housings 18.

The positive-electrode and negative-electrode non-vertical power terminals 22P, 22N are arranged side by side in the vertical direction on a left end part of the electricity storage module 10B of the horizontal connection type. Out of the positive-electrode and negative-electrode non-vertical power terminals 22P, 22N, the non-vertical power terminal 22P located above in FIG. 1 is a positive electrode and the non-vertical power terminal 22N located below is a negative electrode. The mating terminals 14 are connected to the positive-electrode and negative-electrode non-vertical power terminals 22P, 22N from front (in the horizontal direction) as shown by arrows A.

### (Electricity Storage Element 11)

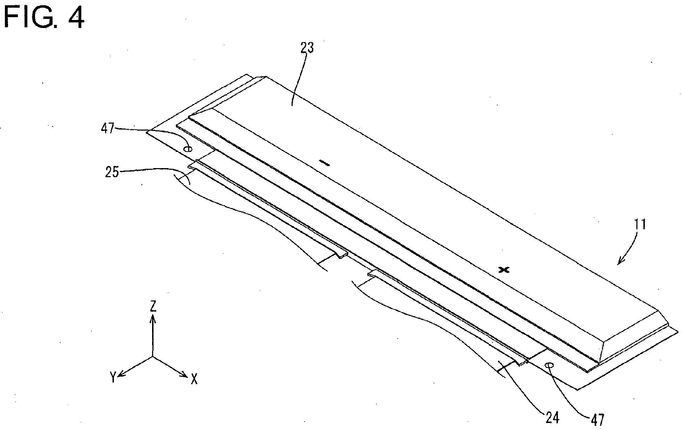

As shown in FIG. 4, the electricity storage element 11 is such that an unillustrated electricity storage part is sandwiched between a pair of laminate sheets 23. Side edges of the pair of laminate sheets 23 are joined by a known technique such as welding or adhesion. Although not shown in detail, the laminate sheet is formed by laminating an aluminum foil on a film made of synthetic resin.

A positive-electrode lead 24 and a negative-electrode lead 25 projecting forward are arranged side by side on a front end edge of the electricity storage element 11 while being spaced apart in the lateral direction. The positive-electrode and negative-electrode leads 24, 25 are in the form of flat sheets. The positive-electrode lead 24 is made of aluminum or aluminum alloy and the negative-electrode lead 25 is made of copper or copper alloy.

### (Electricity Storage Element Group 12)

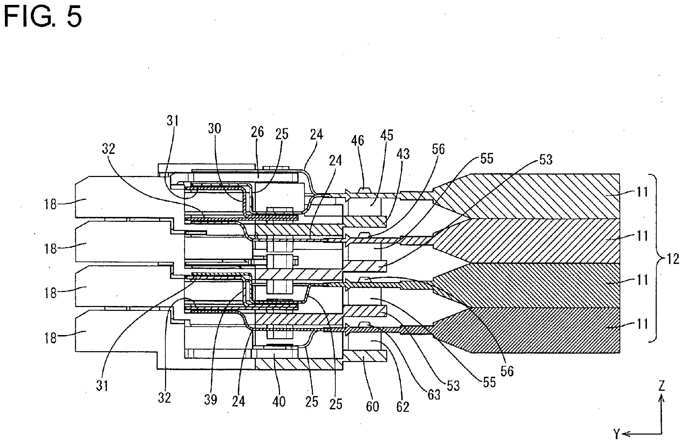

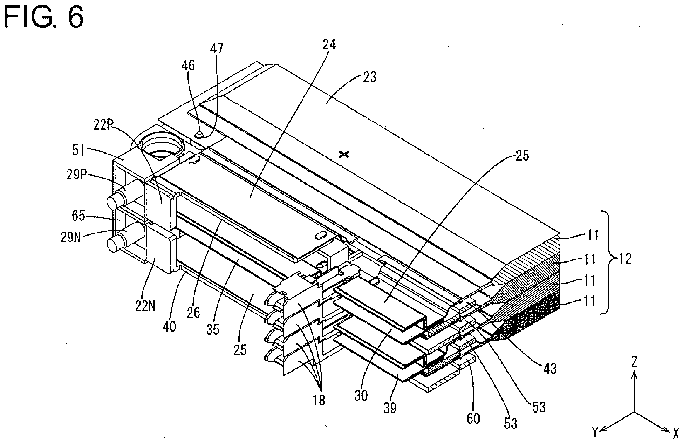

As shown in FIGS. 5 and 6, the electricity storage element group 12 is formed by laminating a plurality of (four in this embodiment) electricity storage elements 11 in the vertical direction. The vertically laminated electricity storage elements 11 are connected in series.

### (Upper Busbar 26)

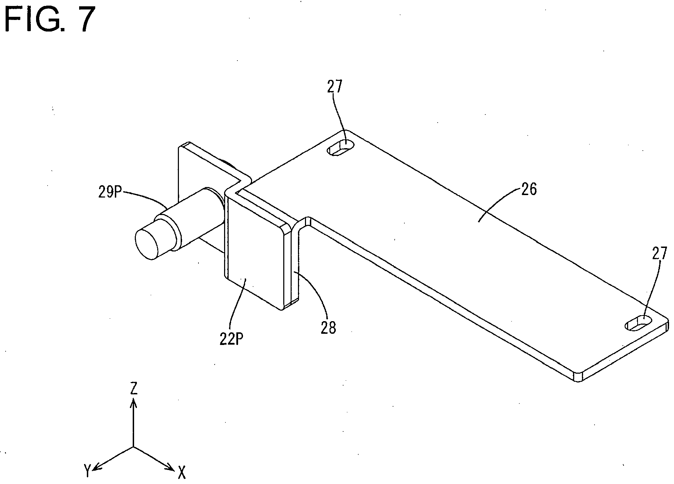

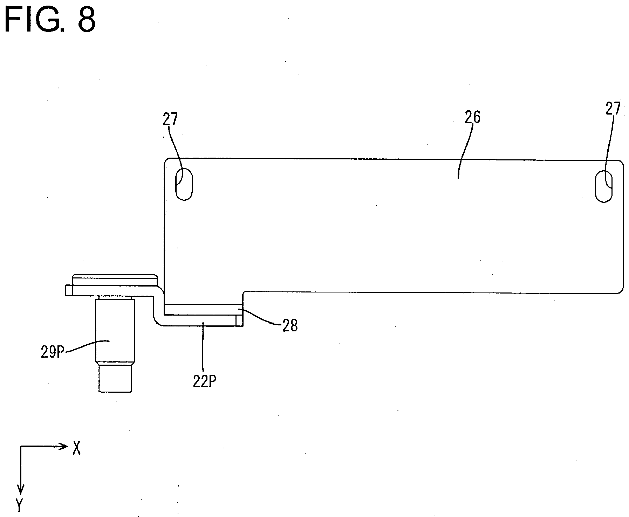

The positive-electrode lead 24 of the electricity storage element 11 arranged in an uppermost stage of the electricity storage element group 12 is connected to an upper busbar 26. As shown in FIGS. 7 and 8, the upper busbar 26 is formed by press-working a metal plate material into a predetermined shape. As the metal plate material for forming the upper busbar 26, an arbitrary metal can be selected from copper, copper alloy, aluminum, aluminum alloy and the like according to need. The upper busbar 26 according to this embodiment is made of aluminum or aluminum alloy similarly to the positive-electrode lead 24.

The positive-electrode lead 24 and the upper busbar 26 are connected by an arbitrary technique such as laser welding, ultrasonic welding, resistance welding, soldering or brazing according to need. In this embodiment, the positive-electrode lead 24 and the upper busbar 26 are connected by laser welding.

As shown in FIG. 8, the upper busbar 26 has a substantially rectangular shape long and narrow in the lateral direction when viewed from above. Vertically penetrating engaging holes 27 are formed on a left-rear end part and a right-rear end part of the upper busbar 26.

An extending portion 28 extending downward is formed on a left-front end part of the upper busbar 26. The non-vertical power terminal 22P is connected to this extending portion 28. The upper busbar 26 and the non-vertical power terminal 22P are connected by an arbitrary technique such as laser welding, ultrasonic welding, resistance welding, soldering or brazing according to need. The non-vertical power terminal 22P is formed by press-working a metal plate material into a predetermined shape.

The non-vertical power terminal 22P is bent into a crank shape when viewed from above. An arbitrary metal such as copper, copper alloy, aluminum or aluminum alloy can be used as the metal material constituting the non-vertical power terminal 22P and the same kind of metal as the metal material constituting the mating terminals 14 is used. In this embodiment, copper or copper alloy is used.

A bar-like stud bolt 29P is arranged to penetrate in the front-back direction (an example of the horizontal direction) on a left end part of the non-vertical power terminal 22P. Although not shown in detail, an external thread is formed on the outer surface of the stud bolt 29P. The mating terminal 14 is connected to this stud bolt 29P from front (an example of the horizontal direction) and, further, an unillustrated nut is threadably engaged with the stud bolt 29P, whereby the mating terminal 14 and the non-vertical power terminal 22P are connected.

### (First Right-Middle Busbar 30)

As shown in FIGS. 5 and 6, the negative-electrode lead 25 of the electricity storage element 11 arranged in the uppermost stage of the electricity storage element group 12 is connected to a first right-middle busbar 30 from above. The positive-electrode lead 24 of the electricity storage element 11 arranged in a second stage of the electricity storage element group 12 from top is connected to this first right-middle busbar 30 from below.

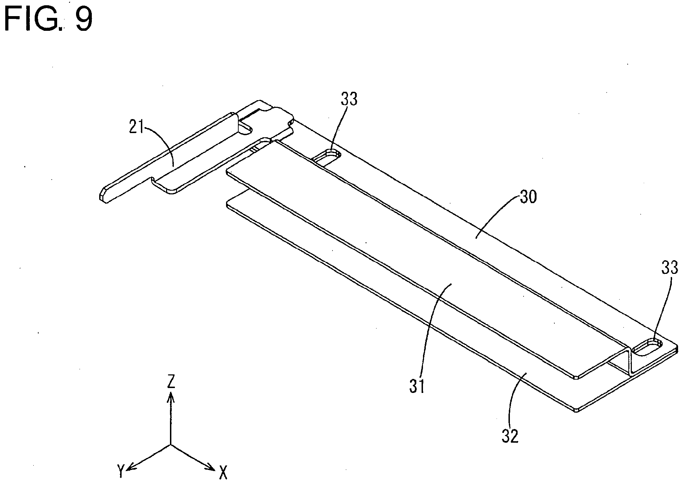

As shown in FIGS. 9 to 11, the first right-middle busbar 30 is shaped to be long and narrow in the lateral direction. The first right-middle busbar 30 is formed by joining an upper plate member 31 located above and formed into a crank shape when laterally viewed and a lower plate member 32 arranged below the upper plate member 31 and made of a metal different from the upper plate member 31. The upper and lower plate members 31, 32 are joined by an arbitrary technique such as cold pressure welding, welding, soldering or brazing according to need. In this embodiment, the upper plate member 31 is made of copper or copper alloy similarly to the negative-electrode lead 25 of the electricity storage element 11 arranged in the uppermost stage of the electricity storage element group 12. Further, the lower plate member 32 is made of aluminum or aluminum alloy similarly to the positive-electrode lead 24 of the electricity storage element 11 arranged in the second stage of the electricity storage element group 12 from top.

The negative-electrode lead 25 of the electricity storage element 11 arranged in the uppermost stage of the electricity storage element group 12 and the upper plate member 31 are connected by an arbitrary technique such as laser welding, ultrasonic welding, resistance welding, soldering or brazing according to need. In this embodiment, the negative-electrode lead 25 and the upper plate member 31 are connected by laser welding.

Further, the positive-electrode lead 24 of the electricity storage element 11 arranged in the second stage of the electricity storage element group 12 from top and the lower plate member 32 are connected by an arbitrary technique such as laser welding, ultrasonic welding, resistance welding, soldering or brazing according to need. In this embodiment, the positive-electrode lead 24 and the lower plate member 32 are connected by laser welding.

Vertically penetrating engaging holes 33 are formed at positions near a rear-left end part and a rear-right end part of the first right-middle busbar 30.

The rear-left end part of the first right-middle busbar 30 extends leftward and the voltage detection terminal 21 for detecting a voltage of the electricity storage element 11 is connected. The voltage detection terminal 21 is formed by press-working a metal plate material into a predetermined shape. An arbitrary metal such as copper, copper alloy, aluminum or aluminum alloy can be used as the metal material constituting the voltage detection terminal 21 according to need.

A pair of locking projections 34 projecting downward are formed on a rear end part of the voltage detection terminal 21 and connected to the first right-middle busbar 30 by an arbitrary technique such as soldering, brazing or welding while vertically penetrating through the first right-middle busbar 30.

### (Left-Middle Busbar 35)

The negative-electrode lead 25 of the electricity storage element 11 arranged in the second stage of the electricity storage element group 12 from top is connected to a left-middle busbar 35 from above. The positive-electrode lead 24 of the electricity storage element 11 arranged in a third stage of the electricity storage element group 12 from top is connected to this left-middle busbar 35 from below.

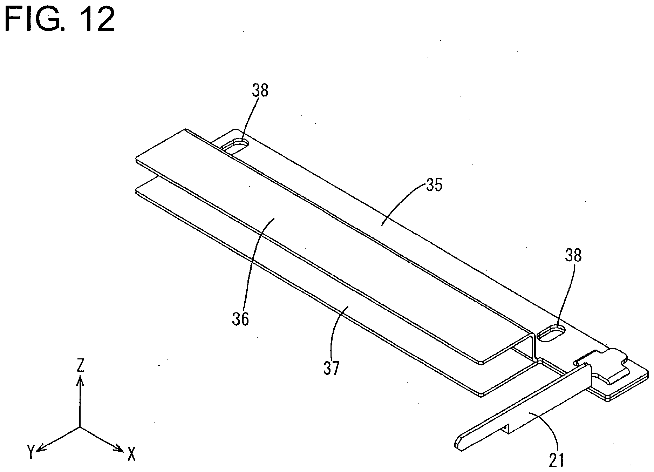

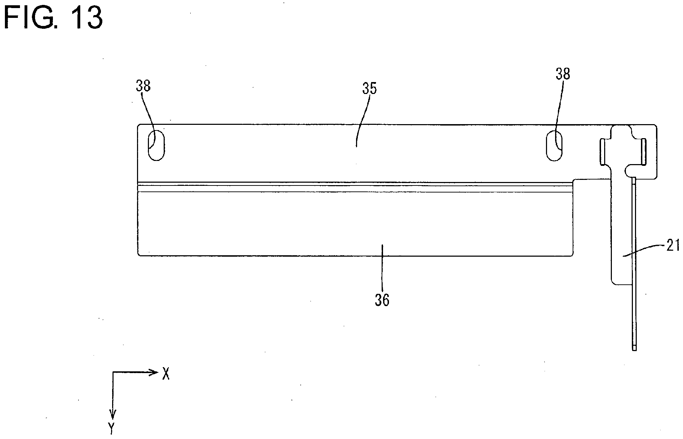

As shown in FIGS. 12 and 13, the left-middle busbar 35 is shaped to be long and narrow in the lateral direction. The left-middle busbar 35 is formed by joining an upper plate member 36 located above and formed into a crank shape when laterally viewed and a lower plate member 37 arranged below the upper plate member 36 and made of a metal different from the upper plate member 36. The upper and lower plate members 36, 37 are joined by an arbitrary technique such as cold pressure welding, welding, soldering or brazing according to need. In this embodiment, the upper plate member 36 is made of copper or copper alloy similarly to the negative-electrode lead 25 of the electricity storage element 11 arranged in the second stage of the electricity storage element group 12 from top. Further, the lower plate member 37 is made of aluminum or aluminum alloy similarly to the positive-electrode lead 24 of the electricity storage element 11 arranged in the third stage of the electricity storage element group 12 from top.

The negative-electrode lead 25 of the electricity storage element 11 arranged in the second stage of the electricity storage element group 12 from top and the upper plate member 36 are connected by an arbitrary technique such as laser welding, ultrasonic welding, resistance welding, soldering or brazing according to need. In this embodiment, the negative-electrode lead 25 and the upper plate member 36 are connected by laser welding.

Further, the positive-electrode lead 24 of the electricity storage element 11 arranged in the third stage of the electricity storage element group 12 from top and the lower plate member 37 are connected by an arbitrary technique such as laser welding, ultrasonic welding, resistance welding, soldering or brazing according to need. In this embodiment, the positive-electrode lead 24 and the lower plate member 37 are connected by laser welding.

Vertically penetrating engaging holes 38 are formed at positions near a rear-left end part and a rear-right end part of the left-middle busbar 35.

The rear-right end part of the left-middle busbar 35 extends rightward and the voltage detection terminal 21 for detecting a voltage of the electricity storage element 11 is connected. The voltage detection terminal 21 is formed by press-working a metal plate material into a predetermined shape. An arbitrary metal such as copper, copper alloy, aluminum or aluminum alloy can be used as the metal material constituting the voltage detection terminal 21 according to need.

A pair of locking projections 34 projecting downward are formed on a rear end part of the voltage detection terminal 21 and connected to the left-middle busbar 35 by an arbitrary technique such as soldering, brazing or welding while vertically penetrating through the left-middle busbar 35.

### (Second Right-Middle Busbar 39)

As shown in FIGS. 5 and 6, the negative-electrode lead 25 of the electricity storage element 11 arranged in the third stage of the electricity storage element group 12 from top is connected to a second right-middle busbar 39 from above. The positive-electrode lead 24 of the electricity storage element 11 arranged in the lowermost stage of the electricity storage element group 12 is connected to this second right-middle busbar 39 from below. This second right-middle busbar 39 have the same shape and size as the first right-middle busbar 30 described above and a different term is given for description.

The negative-electrode lead 25 of the electricity storage element 11 arranged in the third stage of the electricity storage element group 12 from top and an upper plate member 31 are connected by an arbitrary technique such as laser welding, ultrasonic welding, resistance welding, soldering or brazing according to need. In this embodiment, the negative-electrode lead 25 and the upper plate member 31 are connected by laser welding.

Further, the positive-electrode lead 24 of the electricity storage element 11 arranged in the lowermost stage and a lower plate member 32 are connected by an arbitrary technique such as laser welding, ultrasonic welding, resistance welding, soldering or brazing according to need. In this embodiment, the positive-electrode lead 24 and the lower plate member 32 are connected by laser welding.

Since the second right-middle busbar 39 has the same structure as the first right-middle busbar 30, the same members are denoted by the same reference signs and not repeatedly described.

### (Lower Busbar 40)

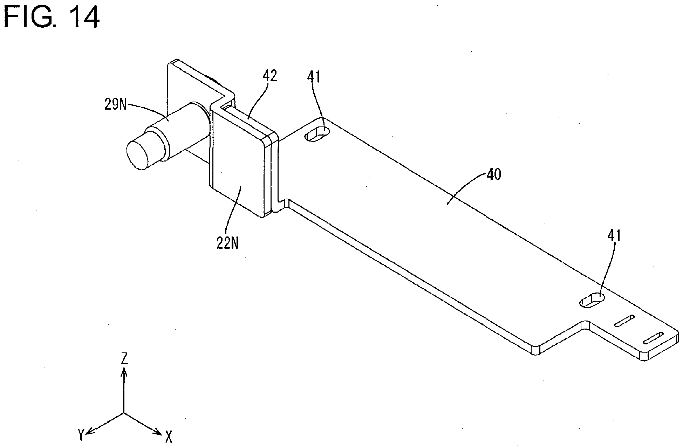

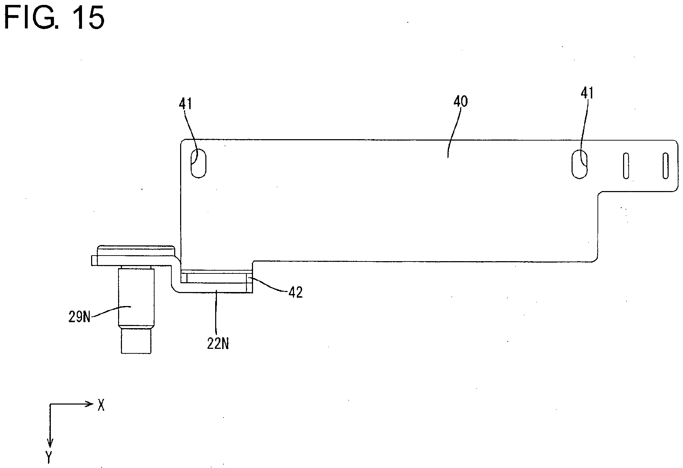

As shown in FIG. 5, the negative-electrode lead 25 of the electricity storage element 11 arranged in the lowermost stage of the electricity storage element group 12 is connected to a lower busbar 40. As shown in FIGS. 14 and 15, the lower busbar 40 is formed by press-working a metal plate material into a predetermined shape. As the metal plate material for forming the lower busbar 40, an arbitrary metal can be selected from copper, copper alloy, aluminum, aluminum alloy and the like according to need. The lower busbar 40 according to this embodiment is made of copper or copper alloy similarly to the negative-electrode lead 25.

The negative-electrode lead 25 and the lower busbar 40 are connected by an arbitrary technique such as laser welding, ultrasonic welding, resistance welding, soldering or brazing according to need. In this embodiment, the negative-electrode lead 25 and the lower busbar 40 are connected by laser welding.

As shown in FIG. 15, the lower busbar 40 has a substantially rectangular shape long and narrow in the lateral direction when viewed from above. Vertically penetrating engaging holes 41 are formed on a left-rear end part and a right-rear end part of the lower busbar 40.

An extending portion 42 extending upward is formed on a left-front end part of the lower busbar 40. The non-vertical power terminal 22N is connected to this extending portion 42. The lower busbar 40 and the non-vertical power terminal 22N are connected by an arbitrary technique such as laser welding, ultrasonic welding, resistance welding, soldering or brazing according to need. The non-vertical power terminal 22N is formed by press-working a metal plate material into a predetermined shape.

The non-vertical power terminal 22N is bent into a crank shape when viewed from above. An arbitrary metal such as copper, copper alloy, aluminum or aluminum alloy can be used as the metal material constituting the non-vertical power terminal 22N and the same kind of metal as the metal material constituting the mating terminals 14 is used. In this embodiment, copper or copper alloy is used.

A bar-like stud bolt 29N is arranged to penetrate in the front-back direction (an example of the horizontal direction) on a left end part of the non-vertical power terminal 22N. Although not shown in detail, an external thread is formed on the outer surface of the stud bolt 29N. The mating terminal 14 is connected to this stud bolt 29N from front (an example of the horizontal direction) and, further, an unillustrated nut is threadably engaged with the stud bolt 29N, whereby the mating terminal 14 and the non-vertical power terminal 22N are connected.

The rear-right end part of the lower busbar 40 extends rightward and the voltage detection terminal 21 for detecting a voltage of the electricity storage element 11 is connected. The voltage detection terminal 21 is formed by press-working a metal plate material into a predetermined shape. An arbitrary metal such as copper, copper alloy, aluminum or aluminum alloy can be used as the metal material constituting the voltage detection terminal 21 according to need.

A pair of locking projections 34 projecting downward are formed on a rear end part of the voltage detection terminal 21 and connected to the lower busbar 40 by an arbitrary technique such as soldering, brazing or welding while vertically penetrating through the lower busbar 40.

### (Upper Spacer 43)

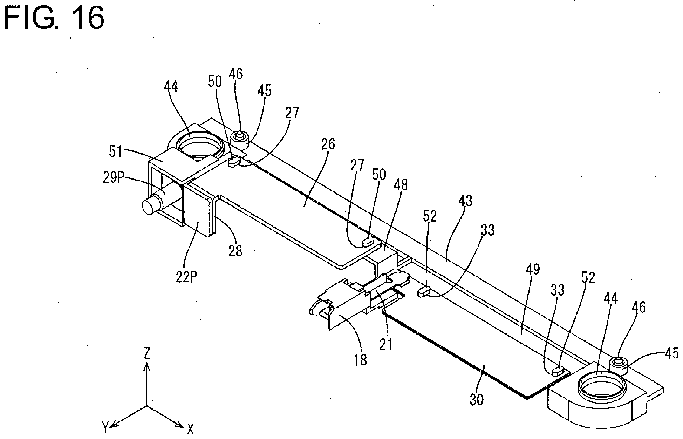

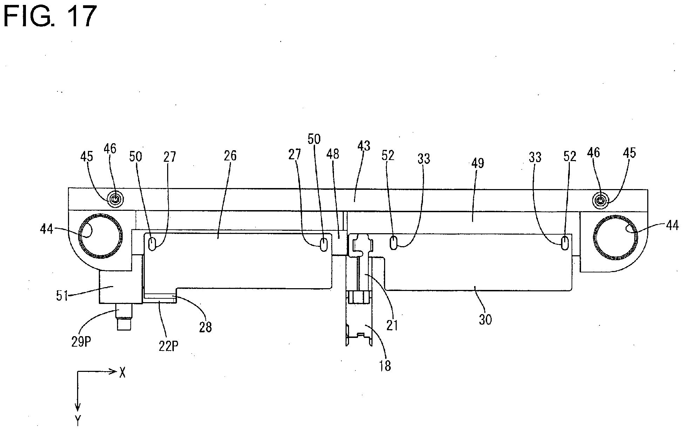

As shown in FIGS. 16 and 17, the upper busbar 26 and the first right-middle busbar 30 are mounted on an upper side of an upper spacer 43. The upper spacer 43 is made of insulating synthetic resin and shaped to be long and narrow in the lateral direction. A length of the upper spacer 43 in the lateral direction is set to be substantially equal to that of the electricity storage elements 11 in the lateral direction.

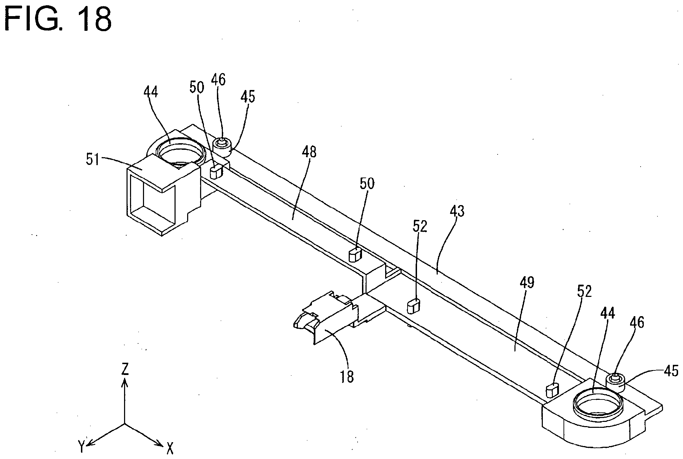

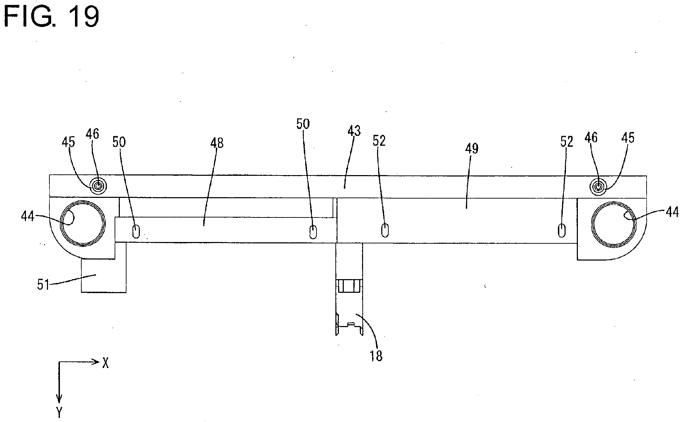

As shown in FIGS. 18 and 19, insertion holes 44 into which unillustrated pins are to be inserted are formed to vertically penetrate at positions of the upper spacer 43 near both left and right end parts.

Base portions 45 projecting upward are formed at positions slightly inwardly of the formation positions of the insertion holes 44 in the lateral direction on a rear end part of the upper spacer 43. The base portion 45 has a cylindrical shape when viewed from above. A positioning pin 46 projecting upward is formed in a radial central part of the base portion 45. The tip of the positioning pin 46 is formed to project upward from the upper end edge of the base portion 45. The positioning pin 46 is inserted into a positioning hole 47 penetrating through a side edge of the electricity storage element 11, thereby relatively positioning the upper spacer 43 and the electricity storage element 11.

An upper stage portion 48 on which the upper busbar 26 is to be placed is formed at a position near a front end part in a substantially left half area of the upper surface of the upper spacer 43 in the lateral direction. Further, a lower stage portion 49 on which the first right-middle busbar 30 is to be placed is formed at a position near the front end part in a substantially right half area of the upper surface of the upper spacer 43 in the lateral direction. The lower stage portion 49 is formed at a position lower than the upper stage portion 48.

The upper stage portion 48 is formed to be slightly longer than the upper busbar 26 in the lateral direction. Engaging portions 50 projecting upward are formed at positions of the upper stage portion 48 near opposite lateral end parts. The upper busbar 26 is positioned by inserting the engaging portions 50 into the engaging holes 27 of the upper busbar 26.

A holding portion 51 in which a left end part of the non-vertical power terminal 22P and the stud bolt 29P are held is formed on a left end part of the upper spacer 43. The left end part of the non-vertical power terminal 22P is surrounded on three sides, i.e. upper, left and lower sides by upper, left and lower walls of the holding portion 51 of the upper spacer 43, whereby the non-vertical power terminal 22P is electrically insulated from other members. The holding portion 51 is open forward.

The lower stage portion 49 is formed to be slightly longer than the first right-middle busbar 30 in the lateral direction. Engaging portions 52 projecting upward are formed at positions of the lower stage portion 49 near opposite lateral end parts. The first right-middle busbar 30 is positioned by inserting the engaging portions 52 into the engaging holes 33 of the first right-middle busbar 30.

The connector housing 18 projecting forward and substantially in the form of a rectangular tube is formed at a position of the lower stage portion 49 near a left end part. The voltage detection terminal 21 mounted on the first right-middle busbar 30 is arranged in the connector housing 18 with the first right-middle busbar 30 mounted on the lower stage portion 49.

### (Middle Spacer 53)

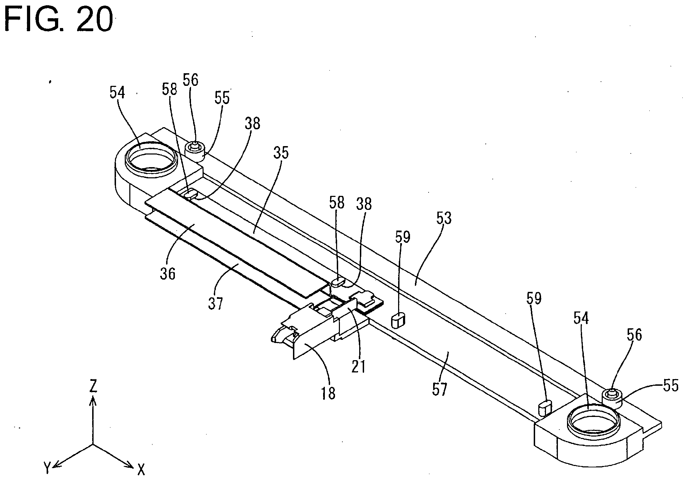

As shown in FIGS. 20 to 23, the left-middle busbar 35 or the second right-middle busbar 39 is selectively mounted on the middle spacer 53.

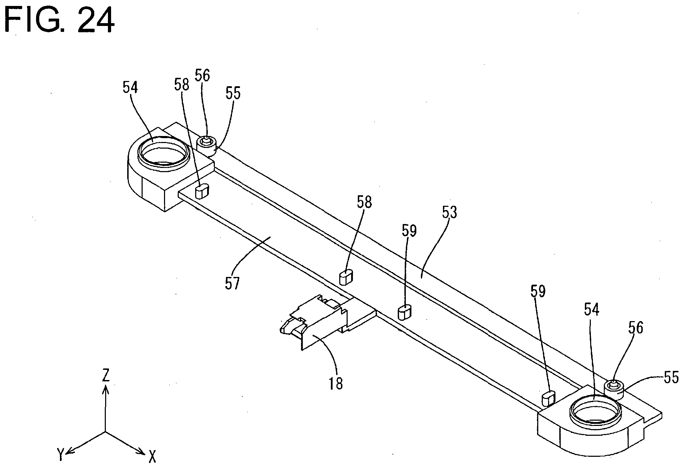

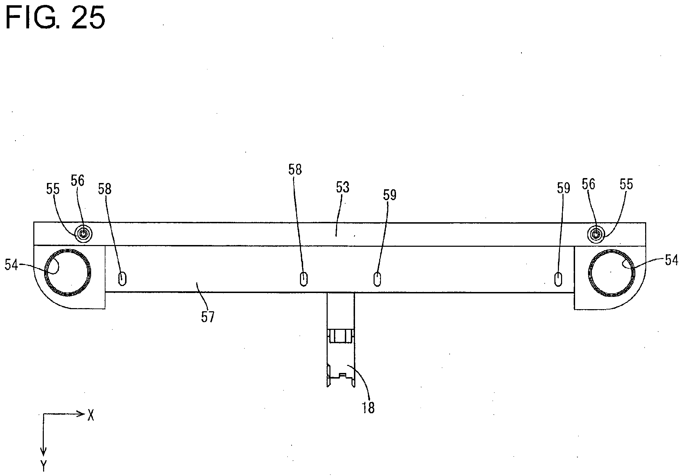

As shown in FIGS. 24 and 25, the middle spacer 53 is made of insulating synthetic resin and shaped to be long and narrow in the lateral direction. A length of the middle spacer 53 in the lateral direction is set to be substantially equal to that of the electricity storage elements 11 in the lateral direction.

Insertion holes 54 into which unillustrated pins are to be inserted are formed to vertically penetrate at positions of the middle spacer 53 near both left and right end parts.

Base portions 55 projecting upward are formed at positions slightly inwardly of the formation positions of the insertion holes 54 in the lateral direction on a rear end part of the middle spacer 53. The base portion 55 has a cylindrical shape when viewed from above. A positioning pin 56 projecting upward is formed in a radial central part of the base portion 55. The tip of the positioning pin 56 is formed to project upward from the upper end edge of the base portion 55. The positioning pin 56 is inserted into a positioning hole 47 penetrating through a side edge of the electricity storage element 11, thereby relatively positioning the middle spacer 53 and the electricity storage element 11.

A placing portion 57 on which the left-middle busbar 35 or the second right-middle busbar 39 is to be selectively placed is formed to extend in the lateral direction on the middle spacer 53. The left-middle busbar 35 is placed on a left half of the placing portion 57 and the second right-middle busbar 39 is placed on a right half of the placing portion 57.

Engaging portions 58 projecting upward are formed in the left half area of the placing portion 57. The left-middle busbar 35 is positioned by inserting the engaging portions 58 into the engaging holes 38 of the left-middle busbar 35.

Further, engaging portions 59 projecting upward are formed in the right half area of the placing portion 57. The second right-middle busbar 39 is positioned by inserting the engaging portions 59 into the engaging holes 41 of the second right-middle busbar 39.

The connector housing 18 projecting forward and substantially in the form of a rectangular tube is formed at a position of the placing portion 57 near a lateral center. The voltage detection terminal 21 mounted on the left-middle busbar 35 or the second right-middle busbar 39 is arranged in the connector housing 18 with the left-middle busbar 35 or the second right-middle busbar 39 mounted on the placing portion 57.

### (Lower Spacer 60)

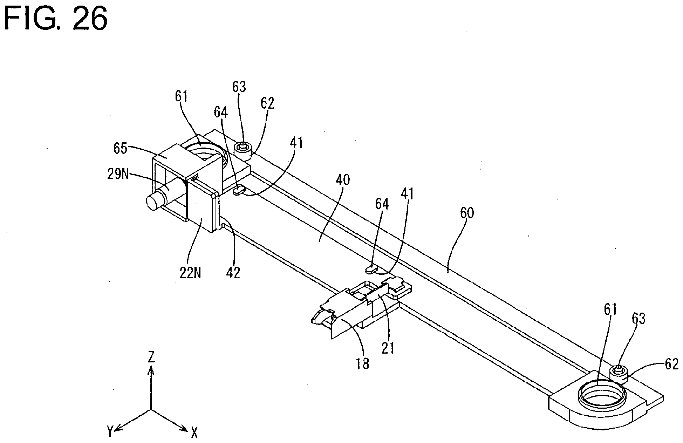

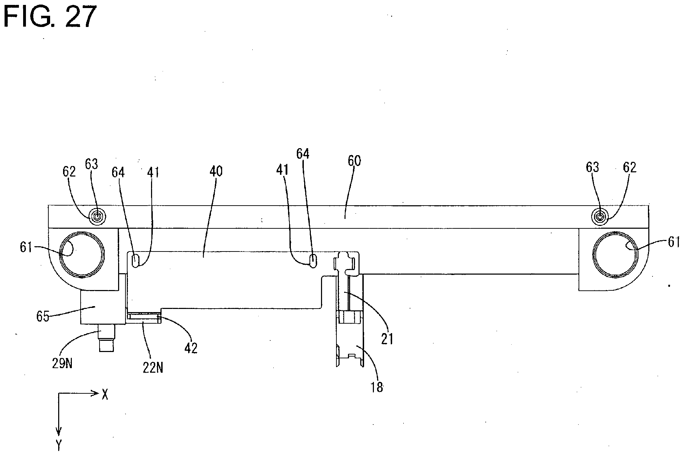

As shown in FIGS. 26 and 27, the lower busbar 40 is mounted on a left half area of a lower spacer 60 in the lateral direction.

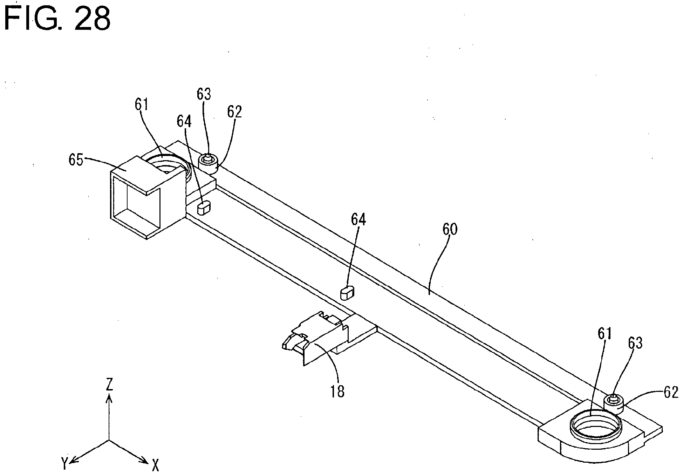

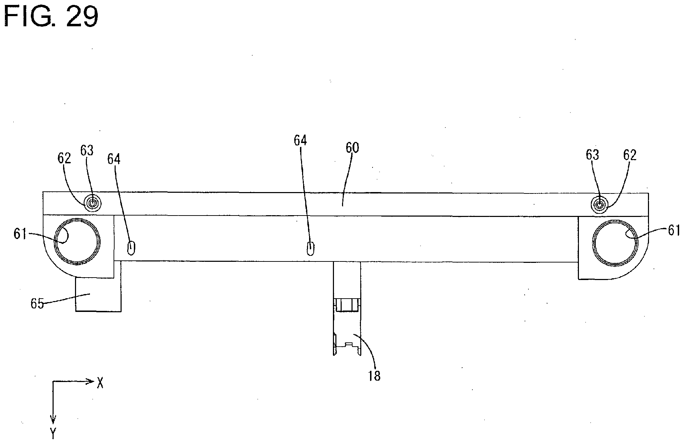

As shown in FIGS. 28 and 29, the lower spacer 60 is made of insulating synthetic resin and shaped to be long and narrow in the lateral direction. A length of the lower spacer 60 in the lateral direction is set to be substantially equal to that of the electricity storage elements 11 in the lateral direction.

Insertion holes 61 into which unillustrated pins are to be inserted are formed to vertically penetrate at positions of the lower spacer 60 near both left and right end parts.

Base portions 62 projecting upward are formed at positions slightly inwardly of the formation positions of the insertion holes 61 in the lateral direction on a rear end part of the lower spacer 60. The base portion 62 has a cylindrical shape when viewed from above. A positioning pin 63 projecting upward is formed in a radial central part of the base portion 62. The tip of the positioning pin 63 is formed to project upward from the upper end edge of the base portion 62. The positioning pin 63 is inserted into a positioning hole 47 penetrating through a side edge of the electricity storage element 11, thereby relatively positioning the lower spacer 60 and the electricity storage element 11.

The upper surface of the lower spacer 60 is formed with a flat surface long and narrow in the lateral direction. The lower busbar 40 is placed in a left half of this upper surface of the lower spacer 60 in the lateral direction.

Engaging portions 64 projecting upward are formed in the left half area of the lower spacer 60. The lower busbar 40 is positioned by inserting the engaging portions 64 into the engaging holes 41 of the lower busbar 40.

The connector housing 18 projecting forward and substantially in the form of a rectangular tube is formed at a position of the lower spacer 60 near a lateral center. The voltage detection terminal 21 mounted on the lower busbar 40 is arranged in the connector housing 18 with the lower busbar 40 mounted on the lower spacer 60.

A holding portion 65 in which a left end part of the non-vertical power terminal 22N and the stud bolt 29N are held is formed on a left end part of the lower spacer 60. The left end part of the non-vertical power terminal 22N is surrounded on three sides, i.e. upper, left and lower sides by upper, left and lower walls of the holding portion 65 of the lower spacer 60, whereby the non-vertical power terminal 22N is electrically insulated from other members.

### (Example of Production Process)

Next, an example of a production process of the electricity storage module 10B of the horizontal connection type is described. Note that the production process of the electricity storage module 10B of the horizontal connection type is not limited to the one described below.

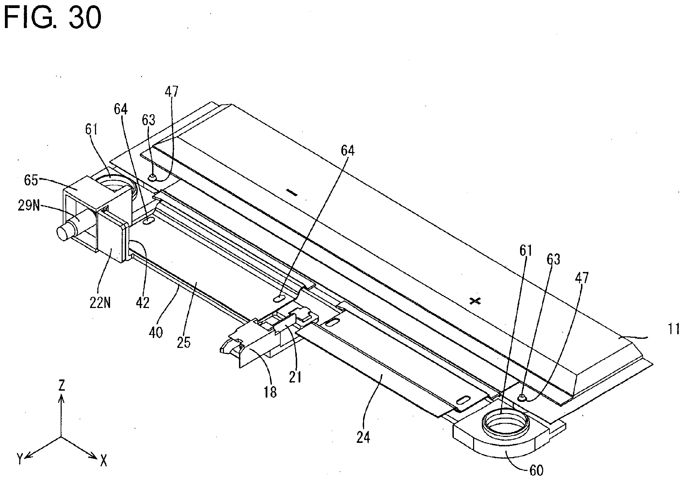

As shown in FIG. 26, the lower busbar 40 is mounted on the upper surface of the lower spacer 60. As shown in FIG. 30, the negative-electrode lead 25 of the electricity storage element 11 arranged in the lowermost stage of the electricity storage element group 12 is laid on this lower busbar 40. The lower busbar 40 and the negative-electrode lead 25 are laser-welded with the negative-electrode lead 25 laid on the lower busbar 40.

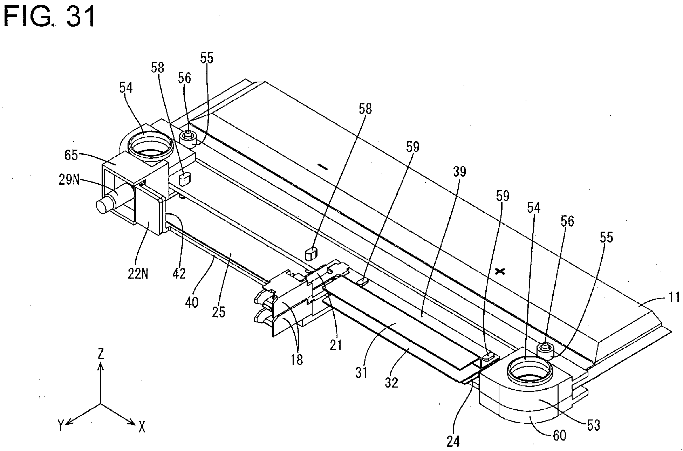

As shown in FIG. 31, the middle spacer 53 is laid on the lower spacer 60 and, further, the second right-middle busbar 39 is mounted on the upper surface of the middle spacer 53. The lower surface of this second right-middle busbar 39 and the positive-electrode lead 24 of the electricity storage element arranged in the lowermost stage of the electricity storage element 11 are connected by laser welding.

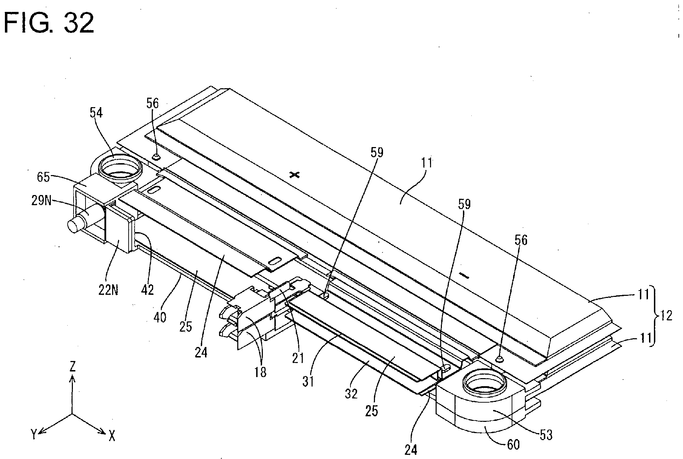

As shown in FIG. 32, the negative-electrode lead 25 of the electricity storage element 11 arranged in the third stage of the electricity storage element group 12 from top is laid on the upper surface of the second right-middle busbar 39. The second right-middle busbar 39 and the negative-electrode lead 25 are laser-welded with the negative-electrode lead 25 laid on the second right-middle busbar 39.

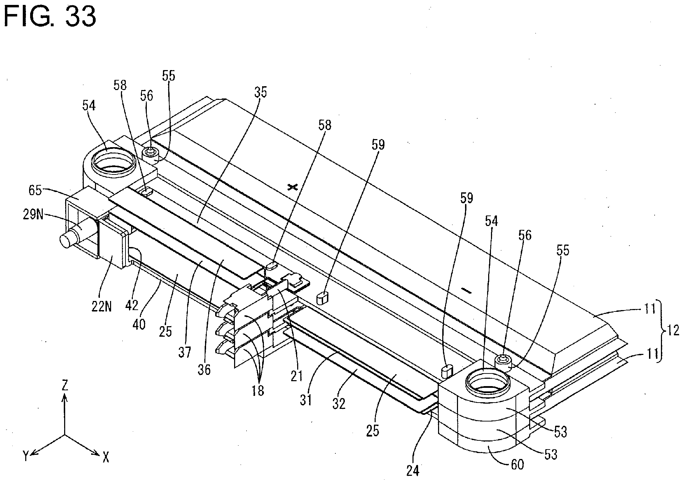

As shown in FIG. 33, the middle spacer 53 is further laid on the middle spacer 53 having the second right-middle busbar 39 placed thereon. The left-middle busbar 35 is mounted on this middle spacer 53. The lower surface of the left-middle busbar 35 and the positive-electrode lead 24 of the electricity storage element arranged in the third stage of the electricity storage element group 12 from top are laser-welded.

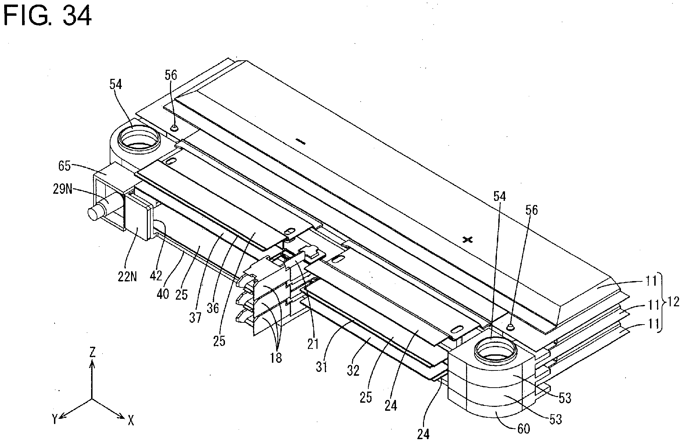

As shown in FIG. 34, the negative-electrode lead 25 of the electricity storage element 11 arranged in the second stage of the electricity storage element group 12 from top is laid on the upper surface of the left-middle busbar 35. The left-middle busbar 35 and the negative-electrode lead 25 are laser-welded with the negative-electrode lead 25 laid on the left-middle busbar 35.

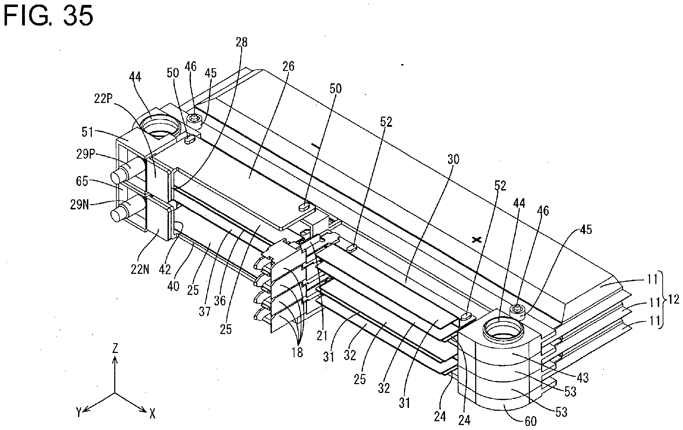

As shown in FIG. 35, the upper spacer 43 is laid on the middle spacer 53. The first right-middle busbar 30 is mounted on the lower stage portion 49 of the upper spacer 43. The lower surface of this first right-middle busbar 30 and the positive-electrode lead 24 of the electricity storage element 11 arranged in the second stage of the electricity storage element group 12 from top are connected by laser welding.

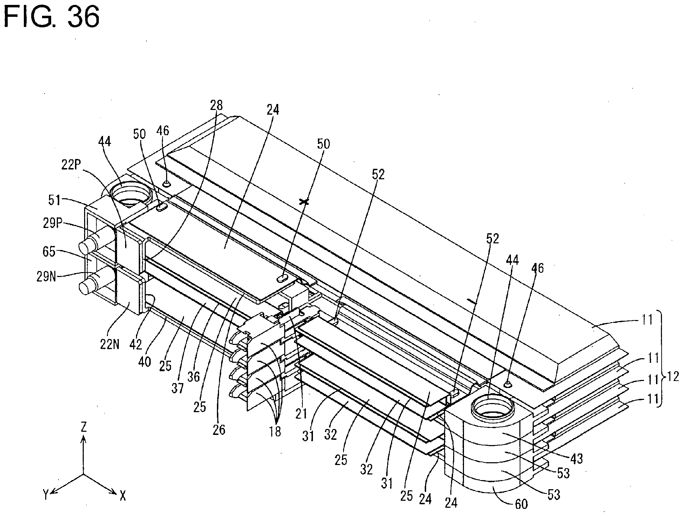

As shown in FIG. 36, the negative-electrode lead 25 of the electricity storage element 11 arranged in the uppermost stage of the electricity storage element group 12 is laid on the upper surface of the first right-middle busbar 30. The first right-middle busbar 30 and the negative-electrode lead 25 are laser-welded with the negative-electrode lead 25 laid on the first right-middle busbar 30.

The upper busbar 26 is mounted on an upper end part of the upper spacer 43. The positive-electrode lead 24 of the electricity storage element 11 arranged in the uppermost stage of the electricity storage element group 12 is laid on the upper surface of this upper busbar 26. The upper busbar 26 and the positive-electrode lead 24 are connected by laser welding with the positive-electrode lead 24 laid on the upper busbar 26.

As shown in FIG. 3, the electricity storage element group 12 assembled as described above is accommodated into the case 15. Subsequently, as shown in FIG. 2, the opening of the case 15 is closed by mounting the cover 16 on the case 15. Subsequently, as shown in FIG. 1, the connector cover 19 is mounted on the cover 16. In this way, the electricity storage module 10B of the horizontal connection type is completed.

### (Electricity Storage Module 10A of Vertical Connection Type)

Next, the electricity storage module 10A of the vertical connection type is described. As shown in FIG. 37, the positive-electrode and negative-electrode vertical power terminals 66P, 66N are arranged side by side in the vertical direction on a left end part of the electricity storage module 10A of the vertical connection type. The positive-electrode and negative-electrode vertical power terminals 66P, 66N are arranged at positions offset in the front-back direction when viewed from above. Specifically, a front end part of the vertical power terminal 66N arranged below out of the positive-electrode and negative-electrode vertical power terminals 66P, 66N is arranged to project forward from a front end part of the vertical power terminal 66P arranged above.

The mating terminals 14 are connected to the positive-electrode and negative-electrode vertical power terminals 66P, 66N from above (vertically above) as shown by arrows B. Out of the positive-electrode and negative-electrode vertical power terminals 66P, 66N, the vertical power terminal 66P located above in FIG. 37 is a positive electrode and the vertical power terminal 66N located below is a negative electrode.

### (Upper Busbar 67)

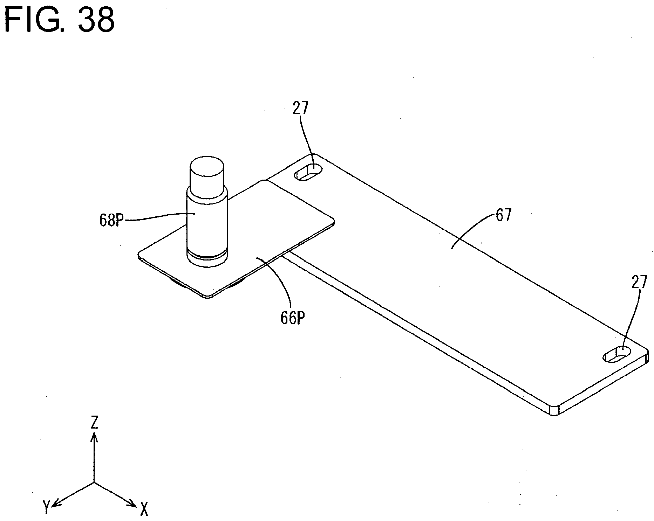

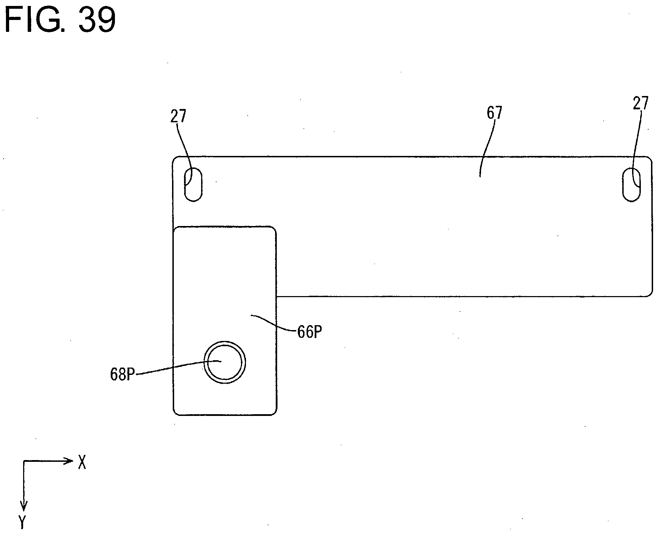

As shown in FIGS. 38 and 39, an upper busbar 67 has a substantially rectangular shape long and narrow in the lateral direction. The plate-like vertical power terminal 66P is connected at a position near a left end part on the upper surface of the upper busbar 67. The vertical power terminal 66P has a substantially rectangular shape and is connected to the upper busbar 67 such that long sides thereof extend in the front-back direction. The upper busbar 67 and the vertical power terminal 66P are connected by an arbitrary technique such as laser welding, ultrasonic welding, resistance welding, soldering or brazing according to need.

An arbitrary metal such as copper, copper alloy, aluminum, aluminum alloy and the like can be used as the metal plate material for forming the vertical power terminal 66P and the same kind of metal as the metal material constituting the mating terminals 14 is used. In this embodiment, copper or copper alloy is used.

A bar-like stud bolt 68P is arranged to penetrate in the vertical direction on a left end part of the vertical power terminal 66P. Although not shown in detail, an external thread is formed on the outer surface of the stud bolt 68P. The mating terminal 14 is connected to this stud bolt 68P vertically from above and, further, an unillustrated nut is threadably engaged with the stud bolt 68P, whereby the mating terminal 14 and the vertical power terminal 66P are connected.

Since the configurations other than the above have substantially the same structure as the upper busbar 26 of the electricity storage module 10B of the horizontal connection type, the same members are denoted by the same reference signs and not repeatedly described.

### (Upper Spacer 69)

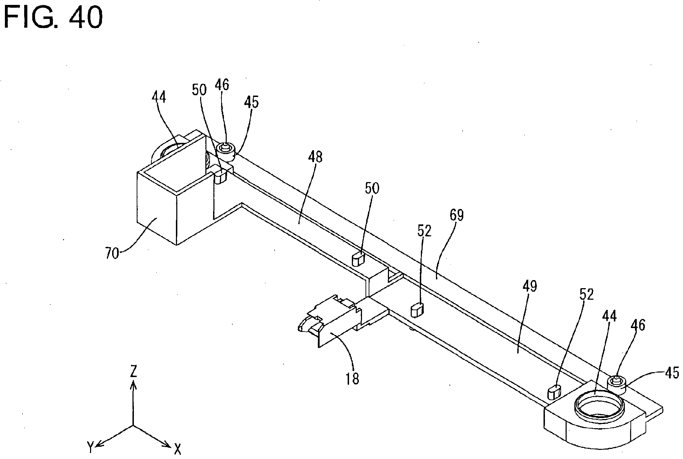

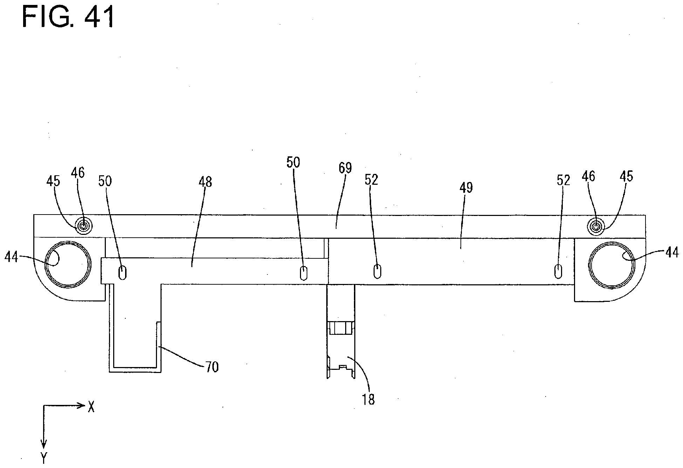

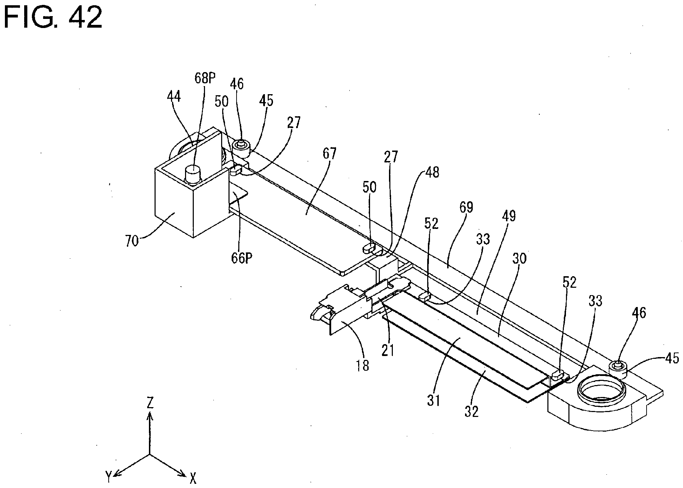

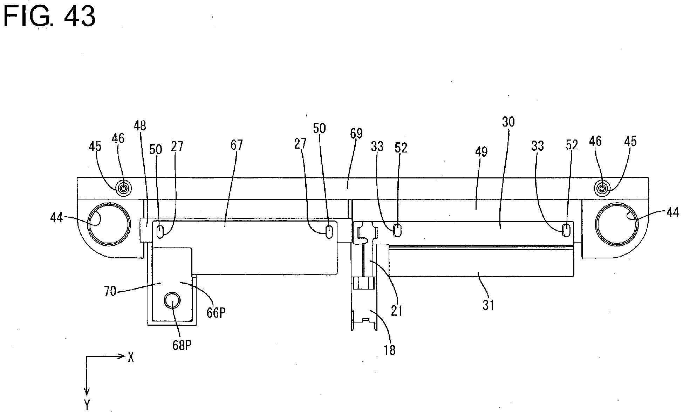

As shown in FIGS. 40 and 41, a holding portion 70 in which the vertical power terminal 66P and the stud bolt 68P are held is formed on a left end part of the upper spacer 69. As shown in FIGS. 42 and 43, the vertical power terminal 66P is surrounded on three sides, i.e. left, front and right sides by left, front and right walls of the holding portion 70 of the upper spacer 69, whereby the vertical power terminal 66P is electrically insulated from other members. The holding portion 70 is open forward.

Since the configurations other than the above have substantially the same structure as the upper spacer 43 used in the electricity storage module 10B of the horizontal connection type, the same members are denoted by the same reference signs and not repeatedly described.

### (Lower Busbar 71)

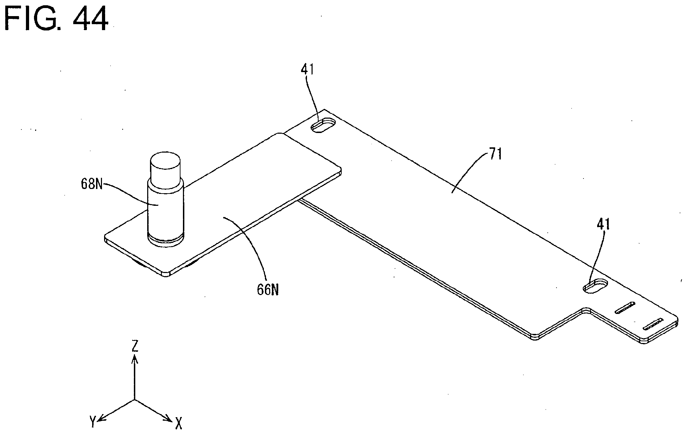

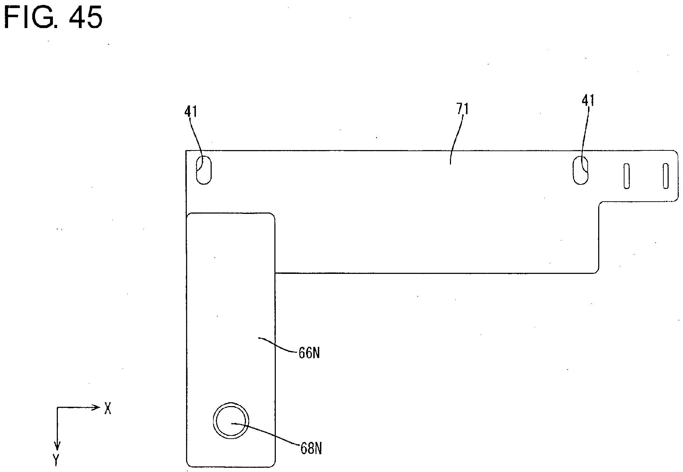

As shown in FIGS. 44 and 45, a lower busbar 71 has a substantially rectangular shape long and narrow in the lateral direction. The plate-like vertical power terminal 66N is connected at a position near a left end part on the upper surface of the lower busbar 71. The vertical power terminal 66N has a substantially rectangular shape and is connected to the vertical power terminal 66N such that long sides thereof extend in the front-back direction. The lower busbar 71 and the vertical power terminal 66N are connected by an arbitrary technique such as laser welding, ultrasonic welding, resistance welding, soldering or brazing according to need.

An arbitrary metal such as copper, copper alloy, aluminum, aluminum alloy and the like can be used as the metal plate material for forming the vertical power terminal 66N and the same kind of metal as the metal material constituting the mating terminals 14 is used. In this embodiment, copper or copper alloy is used.

A length of the vertical power terminal 66N connected to the lower busbar 71 in the front-back direction is set to be longer than that of the vertical power terminal 66P connected to the upper busbar 67 in the front-back direction.

A bar-like stud bolt 68N is arranged to penetrate in the vertical direction on a left end part of the vertical power terminal 66N. Although not shown in detail, an external thread is formed on the outer surface of the stud bolt 68N. The mating terminal 14 is connected to this stud bolt 68N vertically from above and, further, an unillustrated nut is threadably engaged with the stud bolt 68N, whereby the mating terminal 14 and the vertical power terminal 66N are connected.

Since the configurations other than the above have substantially the same structure as the lower busbar 40 used in the electricity storage module 10B of the horizontal connection type, the same members are denoted by the same reference signs and not repeatedly described.

### (Lower Spacer 72)

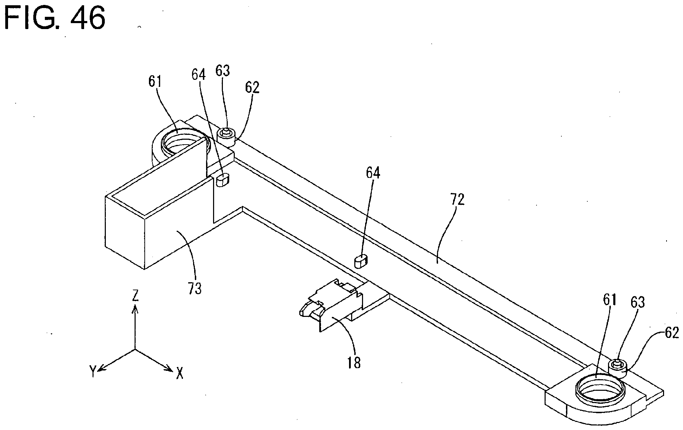

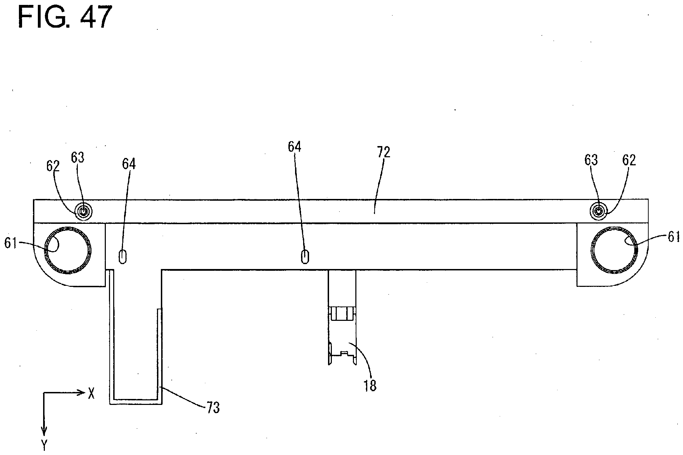

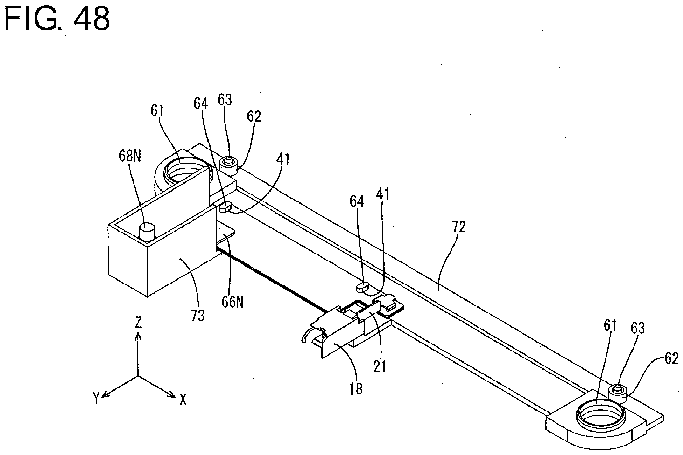

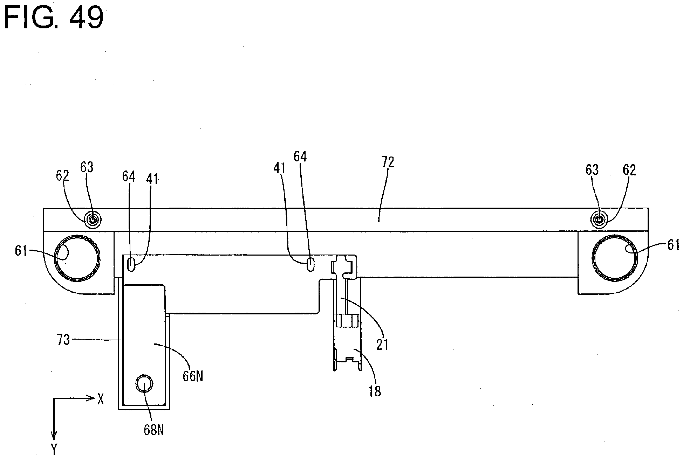

As shown in FIGS. 46 and 47, a holding portion 73 in which the vertical power terminal 66N and the stud bolt 68N are held is formed on a left end part of the lower spacer 72. As shown in FIGS. 48 and 49, the vertical power terminal 66N is surrounded on three sides, i.e. left, front and right sides by left, front and right walls of the holding portion 73 of the lower spacer 72, whereby the vertical power terminal 66N is electrically insulated from other members. The holding portion 73 is open forward.

Since the configurations other than the above have substantially the same structure as the lower spacer 60 used in the electricity storage module 10B of the horizontal connection type, the same members are denoted by the same reference signs and not repeatedly described.

### (Offset Structure)

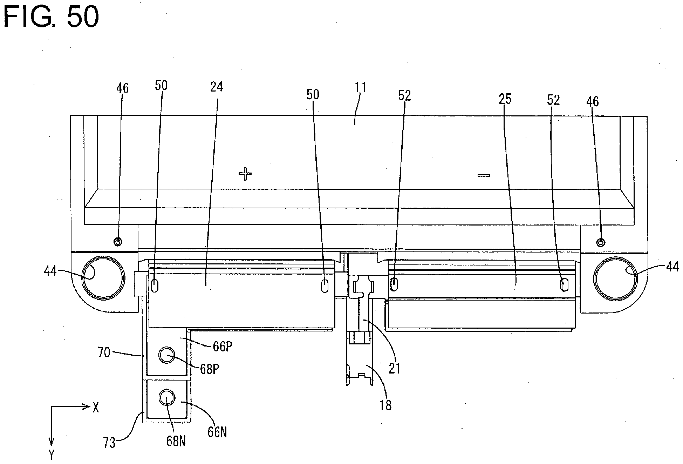

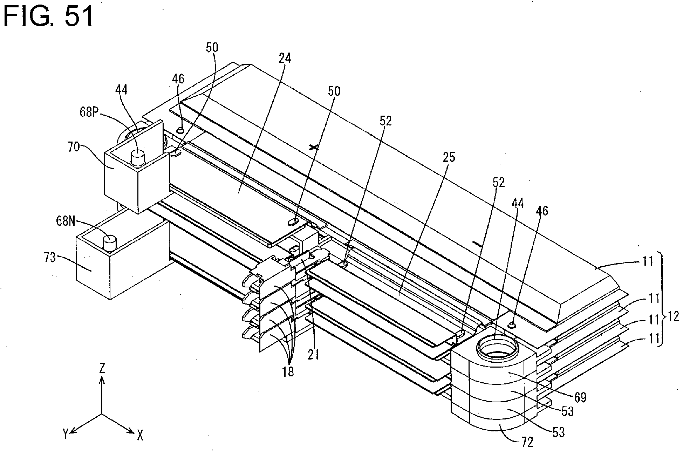

As shown in FIG. 50, the vertical power terminal 66P connected to the upper busbar 67 and the vertical power terminal 66N connected to the lower busbar 70 are arranged to at least partially overlap each other when viewed from above. Further, as shown in FIGS. 50 and 51, the stud bolt 68N arranged on the vertical power terminal 66N connected to the lower busbar 70 is arranged at a position to project more forward than the stud bolt 68P arranged on the vertical power terminal 66P connected to the upper busbar 67. In this way, a connected position of the vertical power terminal 66P connected to the upper busbar 67 and the mating terminal 14 and that of the vertical power terminal 66N connected to the lower busbar 70 and the mating terminal 14 are offset in the front-back direction.

Since the configurations other than the above have substantially the same as the electricity storage module 10B of the horizontal connection type, the same members are denoted by the same reference signs and not repeatedly described.

### (Functions and Effects of Embodiment)

Next, functions and effects of this embodiment are described. The electricity storage modules 10A, 10B according to this embodiment include the electricity storage element group 12 in which the plurality of electricity storage elements 11 are electrically connected, and the positive-electrode and negative-electrode power terminals 22P, 22N, 66P, 66N to be electrically connected to the electricity storage element group 12 and electrically connected to the mating terminals 14, and the power terminals 22P, 22N, 66P, 66N are selected from the positive-electrode and negative-electrode vertical power terminals 66P, 66N to which the mating terminals 14 are to be connected in the vertical downward direction or the positive-electrode and negative-electrode non-vertical power terminals 22P, 22N to which the mating terminals 14 are to be connected from a direction different from the vertical downward direction.

According to this embodiment, the direction of connecting the mating terminals 14 to the power terminals of the electricity storage module 10A, 10B can be selected from either the vertical downward direction or the direction different from the vertical downward direction by selectively mounting either the vertical power terminals 66P, 66N or the non-vertical power terminals 22P, 22N on the electricity storage element group 12.

More specifically, the functions and effects of this embodiment are described. For example, in the case of arranging an electricity storage module in a vehicle, a space for arranging the electricity storage module may be limited. As such an example, an electricity storage module is required to be arranged in a relatively narrow space formed between a plurality of other members in a place where the plurality of other members are already arranged.

In the case of arranging the electricity storage module in a relatively narrow space, a case is supposed where it is difficult to ensure a work space for connecting power terminals of the electricity storage module and mating terminals connected to an external device. For example, a sufficient space cannot be ensured in the horizontal direction between the electricity storage module and another member, with the result that the mating terminals can be possibly connected to the power terminals of the electricity storage module only from above.

In such a case, if the mating terminals can be connected to the power terminals of the electricity storage module only from one direction (e.g. horizontal direction), it is not possible to arrange the electricity storage module in the above relatively narrow space.

Accordingly, in this embodiment, the direction of connecting the mating terminals 14 to the power terminals of the electricity storage module 10A, 10B can be selected from either the vertical downward direction or the direction different from the vertical downward direction by selectively mounting either the vertical power terminals 66P, 66N or the non-vertical power terminals 22P, 22N on the electricity storage element group 12.

As a result, the electricity storage module 10A, 10B can be arranged in such a relatively narrow space where other members are already arranged in a vehicle. In this case, if only a space where the mating terminals 14 can be connected only vertically from above can be ensured, the vertical power terminals 66P, 66N may be mounted on the electricity storage element group 12. Further, in the case of such a space where the mating terminals 14 can be connected only from the direction different from the vertical downward direction, the non-vertical power terminals 22P, 22N may be mounted on the electricity storage element group 12. In this way, a degree of freedom in the layout of the electricity storage modules 10A, 10B can be improved.

Further, according to this embodiment, the positive-electrode and negative-electrode non-vertical power terminals 22P, 22N are connected to the mating terminals 14 in the horizontal direction. This enables the mating terminals 14 to be connected to the non-vertical power terminals 22P, 22N in the horizontal direction.

Further, according to this embodiment, the positive-electrode and negative-electrode vertical power terminals 66P, 66N are arranged at the positions offset when viewed vertically from above. This enables the mating terminals 14 to be easily connected to the vertical power terminals 66P, 66N vertically from above.

Further, according to this embodiment, the vertical power terminal 66P is arranged on the upper spacer 60 and the vertical power terminal 66N is arranged on the lower spacer 72. This enables the vertical power terminals 66P, 66N to be electrically insulated from other members. Further, the vertical power terminals 66P, 66N are also electrically insulated from each other.

Further, according to this embodiment, the vertical power terminal 22P is arranged on the upper spacer 43 and the vertical power terminal 22N is arranged on the lower spacer 60. This enables the vertical power terminals 22P, 22N to be electrically insulated from other members. Further, the vertical power terminals 22P, 22N are also electrically insulated from each other.

### <Other Embodiments>

The present invention is not limited to the above described and illustrated embodiment. For example, the following embodiments are also included in the technical scope of the present invention.
(1) Although the non-vertical power terminals 22P, 22N are connected to the mating terminals 14 in the horizontal direction in the above embodiment, there is no limitation to this and they may be connected to the mating terminals 14 in an arbitrary direction different from the vertical downward direction such as a rightward or leftward direction.
(2) Although the mating terminals 14 are connected in the direction selected from the two directions including the vertical direction and the horizontal direction in the above embodiment, there is no limitation to this and they may be connected in a direction selected from three or more directions.
(3) Although the plurality of electricity storage elements 11 are laid one over another in the vertical direction in the above embodiment, there is no limitation to this and the electricity storage elements 11 may be arranged in the horizontal direction.
(4) Although the positive-electrode and negative-electrode vertical power terminals 66P, 66N are offset in the front-back direction in the above embodiment, there is no limitation to this and they may be offset in the lateral direction or can be offset in an arbitrary direction when viewed vertically from above if necessary.
(5) Although the electricity storage element 11 according to the above embodiment is an electricity storage element 11 in which the electricity storage part is sandwiched by the pair of laminate sheets 23, there is no limitation to this and the electricity storage element 11 of an arbitrary shape such as a rectangular tube shape or a cylindrical shape can be selected according to need.
(6) An arbitrary electricity storage element such as a secondary battery, a condenser or a capacitor can be selected as the electricity storage element 11 according to need.
(7) Although four electricity storage elements 11 are laminated in the electricity storage element group 12 in the above embodiment, there is no limitation to this and two, three, five or more electricity storage elements 11 may be laminated.
(8) Although the plurality of electricity storage elements 11 are connected in series in the above embodiment, there is no limitation to this and the plurality of electricity storage elements 11 may be connected in parallel. Further, the plurality of electricity storage elements 11 connected in parallel may be further connected in series or the plurality of electricity storage elements 11 connected in series may be further connected in parallel.

### List of Reference Signs

- 10A, 10B:: electricity storage module
- 11:: electricity storage element
- 12:: electricity storage element group
- 14:: mating terminal
- 22P, 22N:: non-vertical power terminal
- 43, 69:: upper spacer
- 60, 72:: lower spacer
- 66P, 66N:: vertical power terminal

## Claims

1. An electricity storage module, comprising:
an electricity storage element group in which a plurality of electricity storage elements are electrically connected; and
a positive-electrode and a negative-electrode power terminals to be electrically connected to the electricity storage element group and electrically connected to mating terminals;
wherein the power terminals are selected from a positive-electrode and a negative-electrode vertical power terminals to which the mating terminals are connected in a vertical downward direction or a positive-electrode and a negative-electrode non-vertical power terminals to which the mating terminals are connected in a direction different from the vertical downward direction.

2. An electricity storage module according to claim 1, wherein the non-vertical power terminals are connected to the mating terminals in a horizontal direction.

3. An electricity storage module according to claim 1 or 2, wherein the positive-electrode and negative-electrode vertical power terminals are arranged at positions offset when viewed vertically from above.

4. An electricity storage module according to any one of claims 1 to 3, wherein each of the positive-electrode and negative-electrode power terminals is arranged on a spacer made of insulating synthetic resin.
